# EUROPEAN PATENT APPLICATION

(11) **EP 2 635 039 A2**
(43) Date of publication of application: **04.09.2013**
(21) Application number: 13156107.8
(22) Date of filing: 21.02.2013
(51) Int. Cl.: H04N 21/4367, H04N 21/6377

(54) **Data transmitter and receiver**

(30) Priority: 29.02.2012 US 201261604831 P; 26.11.2012 KR 20120134843
(71) Applicant: Samsung Electronics Co., Ltd., Gyeonggi-do 443-742 (KR)
(72) Inventor: Yun, Suk-jin, Seoul (KR); Kim, Soo-young, Gyeonggi-do (KR); Kim, Jong-hwa, Gyeonggi-do (KR); Na, Il-ju, Gyeonggi-do (KR); Lee, Jae-min, Gyeonggi-do (KR)
(74) Representative: Bray, Richard Anthony

(57) **Abstract**

A data transmitter (100) is provided. The data transmitter includes a packet generating unit (110) which generates a packet including encryption information of a content stream, and a transmitting unit (120) which transmits the generated packet to a data receiver, wherein the generated packet comprises a first field for indicating identification information of the content stream, and a second field for indicating an encryption parameter value of the content stream.

## Description

### CROSS-REFERENCE TO RELATED APPLICATIONS

This application claims priorities from U.S. Provisional Applications No. 61/604,831, filed on February 29, 2012, at the United States Patent and Trademark Office, and Korean Patent Application No. 10-2012-0134843, filed on November 26, 2012, in the Korean Intellectual Property Office, the disclosure of which is incorporated herein by reference in its entirety.

### BACKGROUND

### Field

Apparatuses and methods consistent with exemplary embodiments relate to a data transmitter, a data receiver, and a data transceiving method, and more particularly, to a data transmitter and a data receiver which transmit and receive an encryption parameter for a content stream, a data transceiving system, a data transmitting method, a data receiving method, and a data transceiving method.

### Description of the Related Art

Recently, as multimedia environments have developed, wired interface environments for high-quality content transmission have been introduced. For example, High-Definition Multimedia Interface (HDMI) and Mobile High-Definition Link (MHL) provide transmission standards for high quality of diverse formats of video data, audio data and control signals. In such a wired interface environment for high-quality content transmission, a technology for protecting illegal copy of contents. High-bandwidth Digital Content Protection (HDCP) is a kind of video copyright protection technology which was introduced for the above purpose.

HDCP has a feature of inter-operability which is used as copyright protection technology for contents. Inter-operability indicates that in order to use original content to which HDCP is applied in high-definition, a display apparatus which meets HDCP standard requirements is needed. In other words, in order to use HDCP content, all component connectors which may access a display apparatus must meet the HDCP standard requirements.

If a receiver which is connected to a source providing HDCP content does not meet the HDCP standard requirements, image quality may deteriorate. For example, video resolution may be as compulsorily down-converted as image quality of a general digital versatile disk (DVD) is output. Similarly, DVD audio content which does not meet the HDCP standard requirements may deteriorate to digital audiotape (DAT) quality or at worst may not be output.

Down-conversion of image quality of content is compelled by a particular digital flag, an Image Constraint Token (ICT). A content provider uses a flag so as to limit output by a display apparatus or output by image component of a set top box. The content provider may put an ICT into each disk or content. In order to use high-definition content of the highest resolution, a device supporting HDCP is needed. However, in an environment having no device supporting HDCP, when an HDCP source is connected, it is not always that nothing is output. This may be decided by the content provider.

HDCP has developed from 1.0 version supporting Digital Visual Interface (DVI) to 1.3 version supporting DVI, HDMI, UDI, gigabit video interface (GVIF), DisplayPort (DP) and the like. Recently, 2.x version has been discussed.

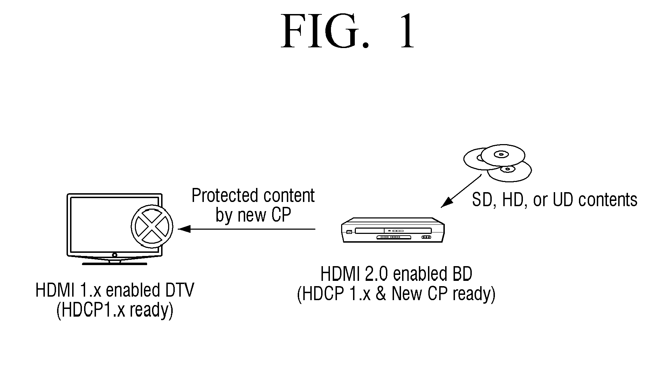

FIG. 1 illustrates a problem of compatibility between a source device and a sink device in HDMI 2.0.

In HDMI 2.0 version, a new content protection (CP) scheme may be adopted. If a source device encrypts audio/video content using new CP, there may be a problem of compatibility with a sink device which can recognize only existing CP as illustrated in FIG. 1. In this case, the source device must be able to identify a sink device any time before transmitting audio/video content. This concept is applied to other wired interface environments which are similar to HDMI in the same manner.

As stated above, adoption of new CP schemes in diverse wired interfaces is under discussion. This is because in an environment of transmitting mass storage ultra-high definition (UHD) 4K content, it is difficult to guarantee the security of content distribution by simply expanding only bandwidth. Accordingly, received UHD 4K content needs to be protected using a stronger content protection scheme.

In order to protect content more strongly by the introduction of new CP, a means for safely transmitting a parameter used for encryption is needed. This is related to link synchronization of CP.

### SUMMARY

Exemplary embodiments may overcome the above disadvantages and other disadvantages not described above. Also, the present invention is not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

Exemplary embodiments provide a data transmitter, a data receiver, a data transceiving system, a data transmitting method, a data receiving method, and a data transceiving method, which provide a new content protection scheme and are capable of safely transmitting and receiving a parameter used for encryption of a content stream.

According to an aspect of an exemplary embodiment, a data transmitter may comprise a packet generator configured to generate a packet including encryption information of a content stream, and a transmitter which transmits the generated packet to a data receiver, wherein the generated packet may include a first field for indicating identification information of the content stream, and a second field for indicating a first encryption parameter value of the content stream.

The second field may comprise at least one from among a first sub-field for indicating a second encryption parameter value to distinguish the content stream, and a second sub-field for indicating a third encryption parameter value for link synchronization between the data transmitter and the data receiver.

The third encryption parameter value for link synchronization may be a value obtained by adding a number of lines of a transmission frame to a fourth encryption parameter value for link synchronization included in a previous packet of the generated packet.

The generated packet may be transmitted between a time point when a vertical synchronizing signal is enabled and a time point when a keep_out signal is enabled, in a clock signal period.

The generated packet may be transmitted between a time point when a transmission period of a general control packet finishes and a time point when a keep_out signal is enabled, in a clock signal period.

The generated packet may be included in a transmission frame of the content stream and be transmitted. In a clock signal period, an encryption enable signal may be transmitted and a result value of encrypting each line of the transmission frame may be output from a time point when a data enable signal is transmitted.

The generated packet may be included in a transmission frame of the content stream and be transmitted, and in a clock signal period, a result value of encrypting each line of the transmission frame may be output between a time point when a win_of_opp signal is disabled and a time point when the win_of_opp signal is enabled again, wherein a win_of_opp signal informs whether to encrypt a frame.

Whether to enable or disable the encryption enable signal may be determined according to a win_of_opp signal in a period when a keep_out signal is enabled in the clock signal period.

The generated packet may be included in a transmission frame of the content stream and be transmitted, and in a clock signal period, a transmission frame of the content stream may be encrypted in a period excluding a period between a time point when a vertical synchronizing signal (vsync) is enabled and a time point when a keep_out signal is enabled.

According to another aspect of the present invention, a data receiver may comprise a receiver configured to receive a packet including encryption information of a content stream from a data transmitter, and a packet parser configured to parse the received packet, wherein the received packet may include a first field for indicating identification information of the content stream, and a second field for indicating a first encryption parameter value of the content stream.

The second field may include at least one from among a first sub-field for indicating a second encryption parameter value to distinguish the content stream, and a second sub-field for indicating a third encryption parameter value for link synchronization between the data transmitter and the data receiver.

The data receiver may determine whether a value obtained by adding a number of lines of a transmission frame to a fourth encryption parameter value for link synchronization included in a previous packet of the received packet coincides with the encryption parameter value for link synchronization included in the second field.

The received packet may be transmitted between a time point when a vertical synchronizing signal is enabled and a time point when a keep_out signal is enabled, in a clock signal period.

The received packet may be included in a transmission frame of the content stream and be transmitted, and in a clock signal period, an encryption enable signal may be transmitted and a result value of encrypting each line of the transmission frame may be output from a time point when a data enable signal is transmitted.

According to yet another aspect of an exemplary embodiment, a data transmitting method may comprise generating a packet including encryption information of a content stream, and transmitting the generated packet to a data receiver, wherein the generated packet may include a first field for indicating identification information of the content stream, and a second field for indicating a first encryption parameter value of the content stream.

The second field may include at least one from among a first sub-field for indicating an encryption parameter value to distinguish the content stream, and a second sub-field for indicating a third encryption parameter value for link synchronization between a data transmitter and a data receiver.

According to yet another aspect of the present invention, a data receiving method may comprise receiving a packet including encryption information of a content stream from a data transmitter, and parsing the received packet, wherein the received packet may include a first field for indicating identification information of the content stream, and a second field for indicating a first encryption parameter value of the content stream.

The second field may include at least one from among a first sub-field for indicating a second encryption parameter value to distinguish the content stream, and a second sub-field for indicating a third encryption parameter value for link synchronization between the data transmitter and a data receiver.

According to yet another aspect of an exemplary embodiment, a data transceiving system may include a source device which reads out Extended Display Identification Data (EDID) from a sink device, and if interface version information included in the EDID coincides with version information of an interface provided by the source device, generates a packet including encryption information of a content stream and transmits the generated packet to the sink device, and the sink device which receives and parses the transmitted packet, wherein the transmitted packet may include at least one from among a first field for indicating identification information of the content stream, and a second field for indicating an encryption parameter value of the content stream.

According to yet another aspect of an exemplary embodiment, a data transceiving method may include by a source device, reading out Extended Display Identification Data (EDID) from a sink device, if version information of an interface supported by the sink device included in the EDID coincides with version information of an interface provided by the source device, generating, at the source device, a packet including encryption information of a content stream and transmitting the generated packet to the sink device, and at the sink device, receiving and parsing the transmitted packet, wherein the transmitted packet may include at least one from among a first field for indicating identification information of the content stream, and a second field for indicating an encryption parameter value of the content stream.

Additional and/or other aspects of exemplary embodiments will be set forth in part in the description which follows and, in part, will be obvious from the description, or may be learned by practice of the aspects of exemplary embodiments.

### BRIEF DESCRIPTION OF THE DRAWING FIGURES

The above and/or other aspects of exemplary embodiments will be more apparent with reference to the accompanying drawings, in which:

FIG. 1 illustrates a problem of compatibility between a source device and a sink device in HDMI 2.0;

FIG. 2 illustrates a method for solving compatibility problem occurring when new CP is used;

FIG. 3 is a flow chart illustrating a process of identifying an HDMI version of a sink device;

FIG. 4 is a flow chart illustrating a data transceiving method consistent with an exemplary embodiment of the present invention;

FIGs. 5 and 6 illustrate a transmission period of a Content Protection Synchronization Packet (CPSP);

FIG. 7 illustrates transmission and reception of a partially encrypted TMDS signal between an HDCP transmitter and an HDCP receiver;

FIG. 8 is a block diagram illustrating a configuration of a data transceiving system consistent with an exemplary embodiment;

FIG. 9 is a block diagram illustrating a configuration of a data transmitter consistent with an exemplary embodiment;

FIG. 10 is a block diagram illustrating a configuration of a data receiver consistent with an exemplary embodiment;

FIG. 11 is a flow chart illustrating a data transmitting method consistent with an exemplary embodiment; and

FIG. 12 is a flow chart illustrating a data receiving method consistent with an exemplary embodiment.

### DETAILED DESCRIPTION OF THE EXEMPLARY EMBODIMENTS

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments can be carried out without those specifically defined matters. Also, well-known functions or constructions are not described in detail since they would obscure the invention with unnecessary detail.

Exemplary embodiments may be applied to diverse wired interface transmission standards such as MHL as well as HDMI within the same scope as the technical idea of the exemplary embodiments. Accordingly, the scope of the exemplary embodiments may extend to similar wired interface transmission standards.

Firstly, a method for solving compatibility problem which may occur when new content protection (CP) is defined in the HDMI 2.x standard, is described below.

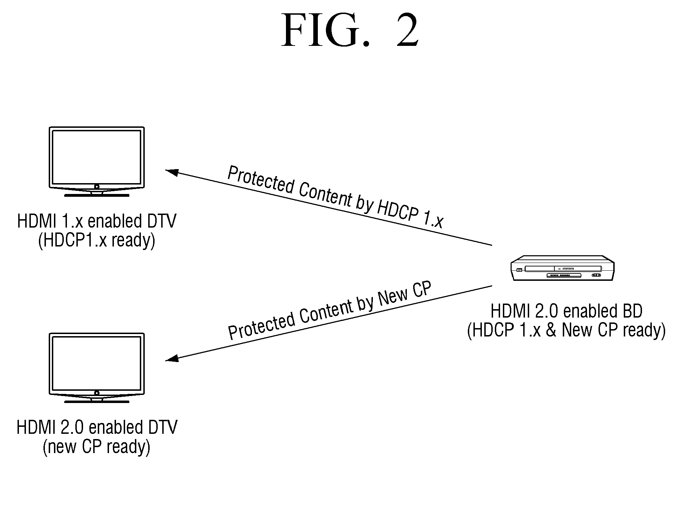

FIG. 2 illustrates a method for solving compatibility problem occurring when new CP is used.

As illustrated in FIG. 2, HDMI 2.x may include new CP as well as HDCP 1.x. A source device checks information about a version of a sink device from Extended Display Identification Data (EDID) or corresponding E-EDID which is received from the sink device. If the sink device supports HDMI 1.x, i.e. if the sink device decrypts a signal encrypted in HDCP 1.x, the source device transmits audio/video data based on legacy syncing capability. On the other hand, if the sink device supports HDMI 2.x, i.e. if the sink device supports the new CP (or decrypts a signal encrypted in HDCP 2.x), the source device transmits audio/video data based on a new syncing capability.

Information about a version of HDMI may be written in a version control field of a Vendor-specific Data Block (VSDB) as shown below.

The table shown below illustrates a VSDB containing a field indicating an HDMI version.

**<Table 1> HDMI-LLC Vendor-Specific Data Block(HDMI-VSDB)**

| Byte # | 7 | 6 | 5 | 4 | 3 | 2 | 1 | 0 |
|---|---|---|---|---|---|---|---|---|
| 0 | Vendor-specific Code (=3) | | | Length(=N) | | | | |
| 1 | 24-bit IEEE Registration Identifier (0x000C03) (least significant byte first) | | | | | | | |
| 2 | | | | | | | | |
| 3 | | | | | | | | |
| 4 | A | | | | B | | | |
| 5 | C | | | | D | | | |
| 6 | Supports_ | DC_48bit | DC_36bit AI | DC_30bit | DC_Y4 | 44 | **HDMI_Version** | DVI_DU AL |
| 7 | Max_TMDS_Clock | | | | | | | |
| 8 | Latency_ Fields.Pres ent | I_Latency_ Fields..Pre sent | HDMI_ Video_present | Rsvd(0) | CNC3 | CNC2 | CNC1 | CNC0 |
| | ... | | | | | | | |
| 13 | 3D_present | 3D_Multi_present | | Image_size | | Rsvd(0) | Rsvd(0) | Rsvd(0) |
| 14 | HDMI_VIC_LEN | | | HDMI_3D_LEN | | | | |
| | ... | | | | | | | |

**<Table 1-1> HDMI_Version**

| Bit 1 | Bit 0 | Description |
|---|---|---|
| 0 | 0 | HDMI 1.x |
| 0 | 1 | HDMI 2.x |
| 1 | 0 | Reserved |
| 1 | 1 | Reserved |

As shown in Table 1 and Table 1-1, HDMI version information may be shown using 2 bits. This shows that 00 indicates HDMI 1.x and 01 indicates HDMI 2.x.

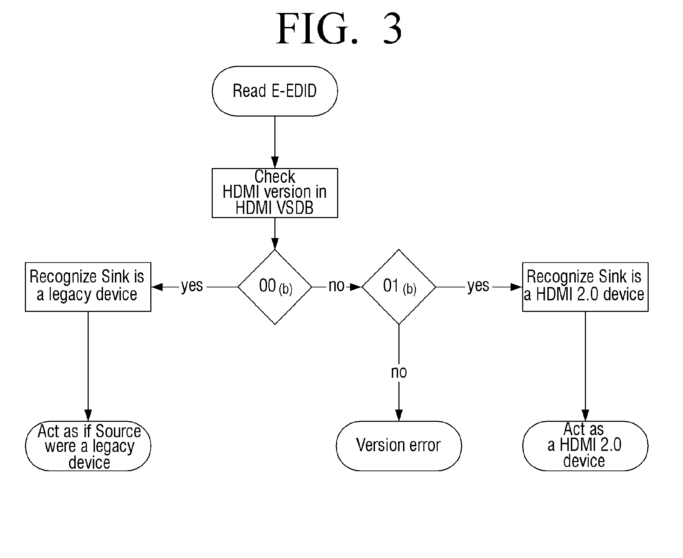

FIG. 3 is a flow chart illustrating a process of identifying an HDMI version of a sink device.

With reference to FIG. 3, a process of identifying an HDMI version of a sink device by a source device proceeds in the following order.

A source device receives E-EDID or EDID from a sink device. The source device checks information about an HDMI version from a VSDB. If bits are 00, the sink device is a legacy device. Accordingly, the source device acts as a legacy device. Or, if bits are 01, the sink device supports HDMI 2.x. Accordingly, the source device supports HDMI 2.x, too.

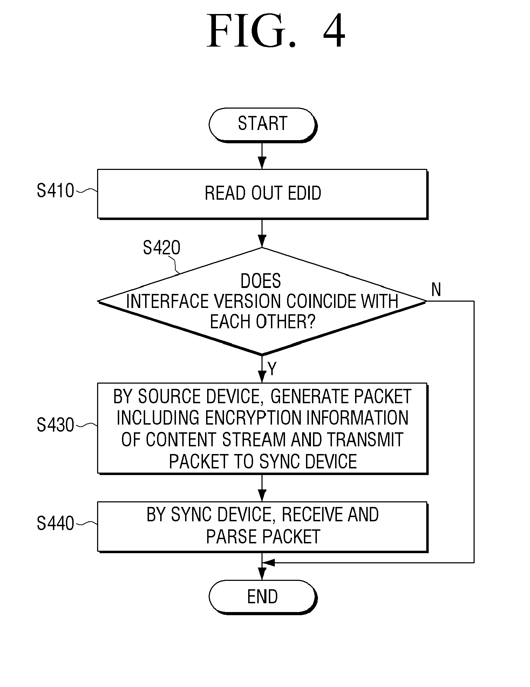

This is more clearly shown in FIG. 4.

FIG. 4 is a flow illustrating a data transceiving method consistent with the exemplary embodiment.

With reference to FIG. 4, in operation S410, the source device reads out EDID from the sink device. In operation S420, the source device determines whether information, which contained in the EDID, regarding an interface version supported by the sink device coincides with information about an interface version provided by the source device. The interface version information may be contained in a VSDB, and may be an HDMI version or HDCP version.

In operation S430, if the interface version information supported by the sink device coincides with interface version information provided by the source device, the sink device may output content of the source device as it is so that the source device generates a packet including encryption information of a content stream and transmits the packet to the sink device.

In operation S440, the sink device receives and parses the packet and extracts the encryption information from the packet. Subsequently, the sink device decrypts the content using the extracted encryption information.

HDCP 2.1 is described below as an example of new CP supported by HDMI 2.x.

The technical idea described below may be also applied to HDCP 2.x version which uses the same or similar algorithm.

HDCP 2.1 uses AES-CTR mode as an encryption algorithm. In HDMI 2.x, if AES-CTR mode is selected as new content protection mechanism, a method for transmitting a parameter of CP is required. Table 2 shown below defines CP Sync. Packet (CPSP: Content Protection Synchronization Packet) which is a new packet to transmit a parameter. CPSP also synchronizes CP.

**<Table 2> Packet Types**

| Packet Type Value | Packet Type |
|---|---|
| 0x00 | Null |
| 0x01 | Audio Clock Regeneration(N/CTS) |
| 0x02 | Audio Sample(L-PCM and IEC 619370 compressed formats) |
| 0x03 | General Control |
| 0x04 | ACP Packet |
| ... | ... |
| 0x0A | Gamut Metadata Packet |
| **0x0B** | **CP Sync. Packet** |
| Ox80+InfoFrameType | InfoFrame Packet |

The structure of CPSP is described in the following diverse exemplary embodiments.

The following tables show the structure of CPSP.

The first exemplary embodiment

A counter value distinguishable between each audio and video may be maintained.

**<Table 3> CP Sync Packet Format**

| Byte# | 7 | 6 | 5 | 4 | 3 | 2 | 1 | 0 |
|---|---|---|---|---|---|---|---|---|
| HB0 | Packet Type (0x0B) | | | | | | | |
| HB1 | Reserved | | Stream_ID | | | | **Type** | |
| HB2 | Reserved | | | | | | | |
| PB0 | StreamCtr[31-24] | | | | | | | |
| PB1 | StreamCtr[23-16] | | | | | | | |
| PB2 | StreamCtr[15-08] | | | | | | | |
| PB3 | StreamCtr[07-00] | | | | | | | |
| PB4 | StreamCtr[63-56] | | | | | | | |
| PB5 | StreamCtr[55-48] | | | | | | | |
| PB6 | StreamCtr[47-40] | | | | | | | |
| PB7 | StreamCtr[39-32] | | | | | | | |
| PB8 | StreamCtr[31-24] | | | | | | | |
| PB9 | StreamCtr[23-16] | | | | | | | |
| PB10 | StreamCtr[15-08] | | | | | | | |
| PB11 | StreamCtr[07-00] | | | | | | | |
| PB12∼PB31 | Reserved | | | | | | | |

**<Table 3-1> Type**

| Bit 1 | Bit 0 | Description |
|---|---|---|
| 0 | 0 | Audio |
| 0 | 1 | Video |
| 1 | 0 | Reserved |
| 1 | 1 | Reserved |

Each field is described below.

Stream_ID (4 bits) is an identifier for identifying a stream from multi-streams.

Type (2 bits) is a field for indicating audio data or video data. If bits are 00, Type indicates an audio signal, or if bits are 01, Type indicates a video signal.

StreamCtr (32 bits) is a count value of audio/video streams among a plurality of streams. StreamCtr is a parameter value which is used for encryption in AES CTR mode.

InputCtr (64 bits) is also a parameter value which is used for encryption in AES CTR mode. InputCtr is used for link synchronization between a sink device and a source device.

InputCtr (64 bits) for an audio signal increases whenever an active line ends. Block size is 16 bytes. InputCtr (64 bits) for a video signal increases by 1 whenever an active line ends. That is, InputCtr becomes a value obtained by adding the number of lines of a transmission frame to InputCtr contained in a previous CPSP. However, InputCtr may not increase by 1 but may increase by a preset number.

The second exemplary embodiment

**<Table 4> CP Sync Packet Format**

| Byte# | 7 | 6 | 5 | 4 | 3 | 2 | 1 | 0 |
|---|---|---|---|---|---|---|---|---|
| HB0 | Packet Type (0x0B) | | | | | | | |
| HB1 | Reserved | | | | | | **Type** | |
| HB2 | Reserved | | | | | | | |
| PB0 | StreamCtr(31-24) | | | | | | | |
| PB1 | StreamCtr(23-16) | | | | | | | |
| PB2 | StreamCtr(15-08) | | | | | | | |
| PB3 | StreamCtr(07-00) | | | | | | | |
| PB4 | StreamCtr(63-56) | | | | | | | |
| PB5 | StreamCtr(55-48) | | | | | | | |
| PB6 | StreamCtr(47-40) | | | | | | | |
| PB7 | StreamCtr(39-32) | | | | | | | |
| PB8 | StreamCtr(31-24) | | | | | | | |
| PB9 | StreamCtr(23-16) | | | | | | | |
| PB10 | StreamCtr(15-08) | | | | | | | |
| PB11 | StreamCtr(07-00) | | | | | | | |
| PB12∼PB31 | Reserved | | | | | | | |

**<Table 4-1> Type**

| Bit 1 | Bit 0 | Description |
|---|---|---|
| 0 | 0 | Audio |
| 0 | 1 | Video |
| 1 | 0 | **Shared** |
| 1 | 1 | Reserved |

The second exemplary embodiment is similar to the first exemplary embodiment, but further includes a shared counter value of audio and video. That is, bits "10" indicates shared type of audio and video. This is named as hybrid scheme.

Description of each field is the same as in the first exemplary embodiment.

The third exemplary embodiment

The third exemplary embodiment may include a field indicating whether encryption is enabled or disabled and a field indicating HDCP version information by using the "Reserved" section in HB1 and HB2 of the first exemplary embodiment.

**<Table 5> CP Sync Packet Format**

| Byte# | 7 | 6 | 5 | 4 | 3 | 2 | | 1 | 0 |
|---|---|---|---|---|---|---|---|---|---|
| HB0 | Packet Type (0x0B) | | | | | | | | |
| HB1 | Reserved | | Stream_ID | | | | **Type** | | |
| HB2 | **Enc** | Reserved | **HDCP major version** | | | **HDCP minor version** | | | |
| PB0 | StreamCtr[31-24] | | | | | | | | |
| PB1 | StreamCtr[23-16] | | | | | | | | |
| PB2 | StreamCtr[15-08] | | | | | | | | |
| PB3 | StreamCtr[07-00] | | | | | | | | |
| PB4 | StreamCtr[63-56] | | | | | | | | |
| PB5 | StreamCtr[55-48] | | | | | | | | |
| PB6 | StreamCtr[47-40] | | | | | | | | |
| PB7 | StreamCtr[39-32] | | | | | | | | |
| PB8 | StreamCtr[31-24] | | | | | | | | |
| PB9 | StreamCtr[23-16] | | | | | | | | |
| PB10 | StreamCtr[15-08] | | | | | | | | |
| PB11 | StreamCtr[07-00] | | | | | | | | |
| PB12∼PB31 | Reserved | | | | | | | | |

**<Table 5-1> Type**

| Bit 1 | Bit 0 | Description |
|---|---|---|
| 0 | 0 | Audio |
| 0 | 1 | Video |
| 1 | 0 | Reserved |
| 1 | 1 | Reserved |

**<Table 5-2> Encryption Enable/Disable**

| Enc | Description |
|---|---|
| 0 | Encryption Disable |
| 1 | Encryption Enable |

**<Table 5-3> HDCP Version**

| HDCP Major Version | HDCP Minor Version | Description |
|---|---|---|
| 010 | 010 | HDCP2.2 |

Each field is described below.

Enc (1bit) indicates whether encryption is enabled or disabled. If Enc is 0, HDCP Encryption for a corresponding frame is disabled, or if Enc is 1, HDCP Encryption for a corresponding frame is enabled.

HDCP major version (3 bits) indicates a major version of HDCP.

HDCP minor version (3 bits) indicates a minor version of HDCP.

In HDCP x.y, x indicates a major version, and y indicates a minor version. For example, in HDCP 2.0, x is 2, and y is 0. In the third exemplary embodiment, both HDCP major version and HDCP minor version are 2 so that HDCP version becomes 2.2.

The fourth exemplary embodiment

Unlike the aforementioned exemplary embodiments, audio and video may be defined as different packets as shown in Tables 6 and 7 below. For example, audio CPSP and video CPSP may be identified by 0x0B and 0x0C, respectively.

**<Table 6> Audio CP Cync. Packet Format**

| Byte# | 7 | 6 | 5 | 4 | 3 | 2 | 1 | 0 |
|---|---|---|---|---|---|---|---|---|
| HB0 | Packet Type (0x0B) | | | | | | | |
| HB1 | Reserved | | | | | | | |
| HB2 | Reserved | | | | | | | |
| PB0 | audioStreamCtr[31-24] | | | | | | | |
| PB1 | audioStreamCtr[23-16] | | | | | | | |
| PB2 | audioStreamCtr[15-08] | | | | | | | |
| PB3 | audioStreamCtr[07-00] | | | | | | | |
| PB4 | audioStreamCtr[63-56] | | | | | | | |
| PB5 | audioStreamCtr[55-48] | | | | | | | |
| PB6 | audioStreamCtr[47-40] | | | | | | | |
| PB7 | audioStreamCtr[39-32] | | | | | | | |
| PB8 | audioStreamCtr[31-24] | | | | | | | |
| PB9 | audioStreamCtr[23-16] | | | | | | | |
| PB10 | audioStreamCtr[15-08] | | | | | | | |
| PB11 | audioStreamCtr[07-00] | | | | | | | |
| PB12∼PB31 | Reserved | | | | | | | |

**<Table 7> Video CP Sync. Packet Format**

| Byte# | 7 | 6 | 5 | 4 | 3 | 2 | 1 | 0 |
|---|---|---|---|---|---|---|---|---|
| HB0 | Packet Type (0x0C) | | | | | | | |
| HB1 | Reserved | | | | | | | |
| HB2 | Reserved | | | | | | | |
| PB0 | videoStreamCtr[31-24] | | | | | | | |
| PB1 | videoStreamCtr[23-16] | | | | | | | |
| PB2 | videoStreamCtr[15-08] | | | | | | | |
| PB3 | videoStreamCtr[07-00] | | | | | | | |
| PB4 | videoStreamCtr[63-56] | | | | | | | |
| PB5 | videoStreamCtr[55-48] | | | | | | | |
| PB6 | videoStreamCtr[47-40] | | | | | | | |
| PB7 | videoStreamCtr[39-32] | | | | | | | |
| PB8 | videoStreamCtr[31-24] | | | | | | | |
| PB9 | videoStreamCtr[23-16] | | | | | | | |
| PB10 | videoStreamCtr[15-08] | | | | | | | |
| PB11 | videoStreamCtr[07-00] | | | | | | | |
| PB12∼PB31 | Reserved | | | | | | | |

Description of each field is the same as in the first exemplary embodiment.

In the present general inventive concept, it is possible to transmit a parameter value used for encryption of audio and video signals of HDCP using at least one of the packets defined in the exemplary embodiments above.

CPSP is included in a transmission frame constituting a transfer stream. CPSP may be transmitted prior to a transmission frame. Transmission timing of CPSP is explained below.

Transmission period of CPSP

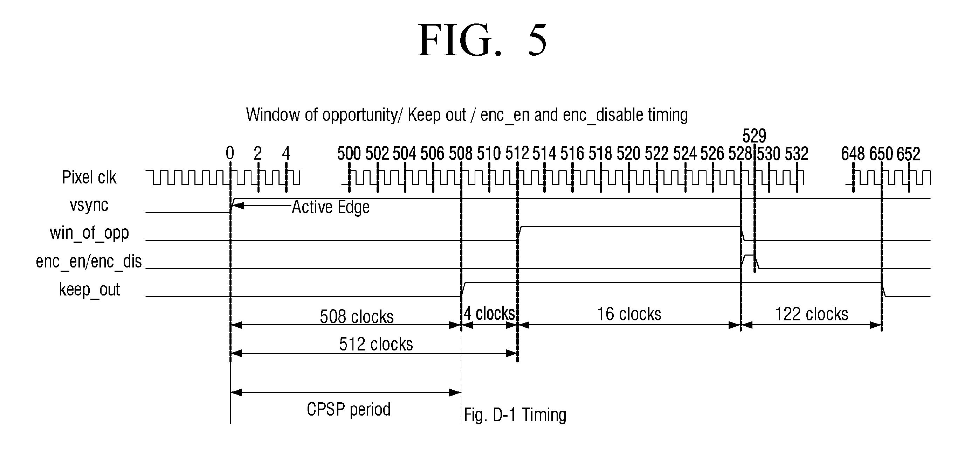

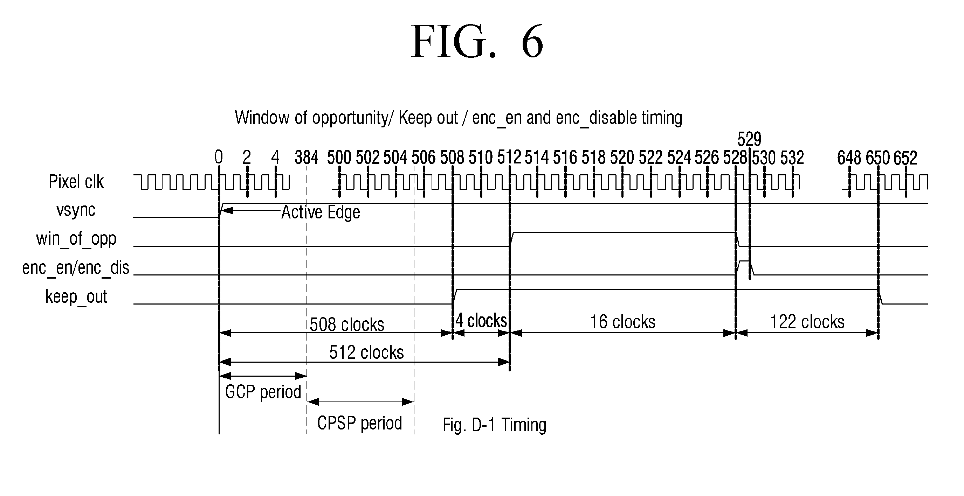

FIGs. 5 and 6 illustrate a transmission period of CPSP.

With reference to FIG. 5, a CPSP may be transmitted between an active edge period and a keep out period of a vertical synchronizing signal (vsync). For example, in an exemplary embodiment shown in FIG. 5, a CPSP may be transmitted between clock 0 and clock 508. A CPSP should not collide with other packets which are previously defined and transmitted.

In FIG. 5, if a keep_out signal is enabled, the CPSP cannot be transmitted any longer and a source device performs operation for preparation of encryption such as generation of a frame key. A sink device performs an operation for decoding. When the keep_out signal is enabled, no packet is permitted to be transmitted until the keep_out signal is disabled. In this period the encryption and decryption can be performed.

In the source device, an encryption enable signal (enc_en/enc_dis) is transmitted in a clock signal period, and a random number which is a result value of encrypting each line of the transmission frame is output from a time point when a data enable signal is transmitted. In other words, this period may be a period from a time point when a win_of_opp signal is disabled until a time point when the win_of_opp signal is enabled again in the clock signal period.

Further, with reference to FIG. 6, in a clock signal period, a CPSP may be transmitted between a time point when a transmission period of a general control packet finishes and a time point when a keep_out signal is enabled. In an exemplary embodiment shown in FIG. 6, a CPSP may be transmitted between clock 384 and clock 508. As in FIG. 5, a CPSP should not collide with other packets which are previously defined and transmitted such as a general control packet.

Fundamentally, HDCP 2.x performs encryption from a time point when an encryption enable signal (enc_en/enc_dis) is transmitted, and encrypts the entire frames to be transmitted. Accordingly, after the first frame is encrypted, all the subsequent frames may be encrypted. By the way, since every frame includes a CPSP, all the CPSPs after the first frame are encrypted and transmitted.

However, it may be inefficient to encrypt the CPSPs included in all the frames starting from the second frame in consideration of the purpose of CPSP of transmitting a parameter for encryption. Accordingly, as an alternative to the present general inventive concept, encryption may not be performed from a time point when a vertical synchronizing signal (vsync) is enabled until a time point when a keep_out signal is enabled. That is, in a clock signal period, encryption may be performed in a period excluding the period between a time point when a vertical synchronizing signal (vsync) is enabled and a time point when a keep_out signal is enabled. In this case, the CPSPs of all the frames are not encrypted.

Whether to encrypt a transmission frame is determined based on an encryption status signal value (ex. EESS: Enhance Encryption Status Signaling) which is displayed in a period when a win_of_opp signal is transmitted. According to the EESS, an encryption enable signal (enc_en/enc_dis) determines whether encryption is applied to a current frame (enc_en) or not (enc_dis). That is, a win_of_opp signal informs whether to encrypt a subsequent frame. Thus, it is determined whether to perform encryption.

**<Table 8> Enhanced Encryption Status Signaling(EESS)**

| CTL3 | CTL2 | CTL1 | CTL0 | Description |
|---|---|---|---|---|
| 1 | 0 | 0 | 1 | Encryption is enabled for this frame. |
| 0 | 0 | 0 | 1 | Encryption is enabled for this frame. |

Partial Encryption

If there is a large amount of resource of audio and video signals to be transmitted, high-speed data transmission becomes difficult and it may be a burden to support audio and video having a large transmission quantity in terms of security. To solve this problem, partial encryption may be considered. For example, video stream bit encryption of 24 bits may be a standard.

In addition, in color coordinate, only some bits may be encrypted instead of 8-bit encryption of each color. For example, the most significant 4 bits from among 8 bits may be encrypted, or 4bits may be encrypted at random.

Partial encryption information may be transmitted to a sink device in the authentication period.

Partial encryption may be performed by scrambling some bits from among Red[7:0], Green[7:0], and Blue[7:0] of video stream bits of HDMI Transition Minimized Differential Signaling (TMDS).

For example, the most significant 4 bits of each TMDS channel may be scrambled or all bits (8 bits) of a TMDS channel may be scrambled.

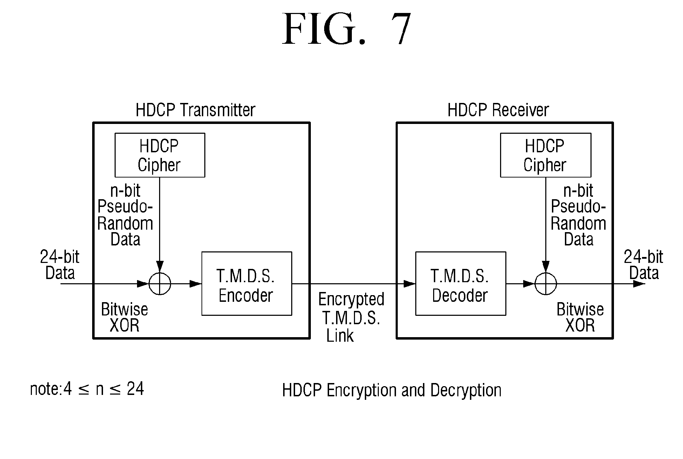

FIG. 7 illustrates transmission and reception of a partially encrypted TMDS signal between an HDCP transmitter and an HDCP receiver.

As illustrated in FIG. 7, the HDCP transmitter encrypts some or all of the bits of a color coordinate and transmits an encrypted TMDS to the HDCP receiver. The HDCP receiver receives and decrypts the encrypted TMDS.

Table 9 below shows bit match of a TMDS channel and a video stream.

**<Table 9> Encryption Stream Mapping**

| Cipher Output | T.M.D.S. Channel | Video Stream Bits |
|---|---|---|
| 23:16 | 2 | Red[7:0] |
| 15:8 | 1 | Green[7:0] |
| 7:0 | 0 | Blue[7:0] |

In TMDS, a bit scrambling position may be diverse. Table 10 below shows an example.

**<Table 10>**

| Scrambling Position(3 bit) | Description |
|---|---|
| 0x0 | The whole 24-bits (default, n=24) |
| 0x1 | MSB 4 bits of each video stream bit (n=12) |
| 0x2 | Channel 1 (n=8) |
| 0x3∼0x7 | Reserved |

As shown in Table 10, 0∼2 bits correspond to a method of scrambling each bit. If bit 0x0 is 1, all the bits are scrambled. If bit 0x1 is 1, the most significant 4 bits of each video stream bit are scrambled. If bit 0x2 is 1, only channel 1 is scrambled.

In the HDMI authentication process, a source device and a sink device share information about a scrambling point of video data. More specifically, a source device encrypts scrambling point information using a master key (Km) and a session key (Ks) and transmits the information to a sink device. The master key (Km) and the session key (Ks) are described in specifications of HDCP 1.x and HDCP 2.x.

Hereinbelow, a sink device, a source device, and a data transceiving system consisting of the sink device and the source device are described according to an exemplary embodiment.

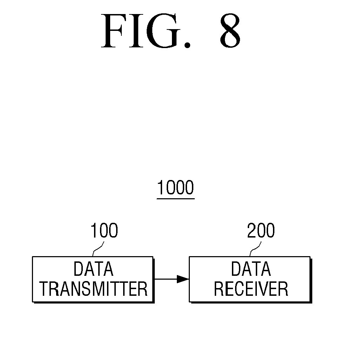

FIG. 8 is a block diagram illustrating a configuration of a data transceiving system 1000 consistent with an exemplary embodiment.

As illustrated in FIG. 8, the data transceiving system 1000 consistent with an exemplary embodiment may include a source device 100 and a sink device 200.

The source device 100 reads out EDID from the sink device 200 and determines whether interface version information contained in the EDID coincides with version information of an interface provided by the source device 100. If the version information coincides with each other, the source device 100 generates a packet including encryption information of a content stream and transmits the packet to the sink device 200.

The sink device 200 receives and parses the packet.

In this case, the packet may include the first field for indicating identification information of the content stream, and the second field for indicating an encryption parameter value of the content stream.

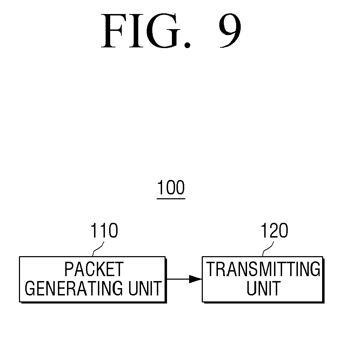

FIG. 9 is a block diagram illustrating a configuration of a data transmitter 100 consistent with an exemplary embodiment.

With reference to FIG. 9, the data transmitter 100 may include a packet generating unit 110 and a transmitting unit 120. The data transmitter also may include a memory and a processor to assist in performing the operations described in detail below.

The packet generating unit 110 generates a packet including encryption information of a content stream.

The transmitting unit 120 transmits the generated packet to a data receiver 200.

The generated packet may include the first field for indicating identification information of the content stream, and the second field for indicating an encryption parameter value of the content stream. Detailed composition and a transmission period of the packet has been described above.

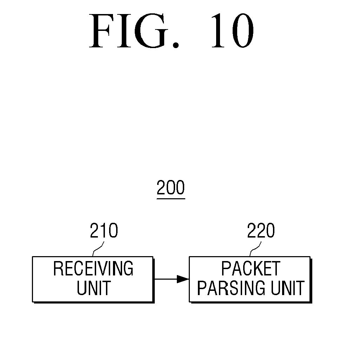

FIG. 10 is a block diagram illustrating a configuration of a data receiver 200 consistent with an exemplary embodiment of the present invention.

With reference to FIG. 10, the data receiver 200 may include a receiving unit 210 and a packet parsing unit 220. The data receiver also may include a memory and a processor to assist in performing the operations described in detail below.

The receiving unit 210 receives a packet including encryption information of a content stream from the data transmitter 100.

The packet parsing unit 220 parses the received packet.

The received packet may include the first field for indicating identification information of the content stream, and the second field for indicating an encryption parameter value of the content stream. Detailed composition and transmission period of the packet has been described above.

Hereinbelow, a data transmitting method and a data receiving method consistent with an exemplary embodiment are described. A data transceiving method has been described above with reference to FIG. 4, and thus is not repeated here.

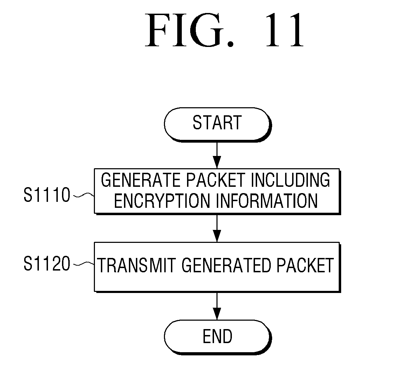

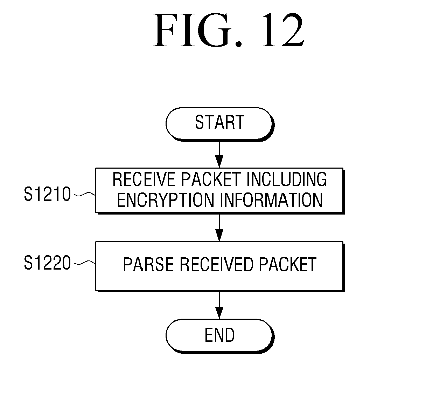

FIG. 11 is a flow chart illustrating a data transmitting method consistent with an exemplary embodiment, and FIG. 12 is a flow chart illustrating a data receiving method consistent with an exemplary embodiment.

With reference to FIG. 11, the data transmitting method may include generating a packet including encryption information of a content stream in operation S1110, and transmitting the generated packet to a data receiver in operation S1120. The generated packet may include at least one of the first field for indicating identification information of the content stream, and the second field for indicating an encryption parameter value of the content stream. Detailed composition, transmission period, and operations of the packet have been described above.

With reference to FIG. 12, the data receiving method may include receiving a packet including encryption information of a content stream from a data transmitter in operation S1210, and parsing the received packet in operation S1120. The received packet may include at least one of the first field for indicating identification information of the content stream, and the second field for indicating an encryption parameter value of the content stream. Detailed composition, transmission period, and operations of the packet have been described above.

The foregoing exemplary embodiments and advantages are merely exemplary and are not to be construed as limiting the present invention. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data transmitter (100) comprising:
a packet generator (110) configured to generate a packet including encryption information of a content stream; and
a transmitter (120) which transmits the generated packet to a data receiver (200),
wherein the generated packet comprises a first field for indicating identification information of the content stream, and a second field for indicating a first encryption parameter value of the content stream.

2. The data transmitter as claimed in claim 1, wherein the second field comprises at least from among a first sub-field for indicating a second encryption parameter value to distinguish the content stream, and a second sub-field for indicating a third encryption parameter value for link synchronization between the data transmitter and the data receiver.

3. The data transmitter as claimed in claim 2, wherein the third encryption parameter value for link synchronization is a value obtained by adding a number of lines of a transmission frame to a fourth encryption parameter value for link synchronization included in a previous packet of the generated packet.

4. The data transmitter as claimed in claim 1, wherein the generated packet is transmitted between a time point when a vertical synchronizing signal is enabled and a time point when a keep_out signal is enabled, in a clock signal period.

5. The data transmitter as claimed in claim 1, wherein the generated packet is transmitted between a time point when a transmission period of a general control packet finishes and a time point when a keep_out signal is enabled, in a clock signal period.

6. The data transmitter as claimed in claim 1, wherein the generated packet is included in a transmission frame of the content stream and is transmitted, and
in a clock signal period, an encryption enable signal (enc_en/enc_dis) is transmitted and a result value of encrypting each line of the transmission frame is output from a time point when a data enable signal is transmitted.

7. The data transmitter as claimed in claim 1, wherein the generated packet is included in a transmission frame of the content stream and is transmitted, and
in a clock signal period, a result value of encrypting each line of the transmission frame is output between a time point when a win_of_opp signal is disabled and a time point when the win_of_opp signal is enabled again.

8. The data transmitter as claimed in claim 6, wherein whether to enable or disable the encryption enable signal is determined according to a win_of_opp signal in a period when a keep_out signal is enabled in the clock signal period.

9. The data transmitter as claimed in claim 1, wherein the generated packet is included in a transmission frame of the content stream, and is transmitted, and
in a clock signal period, a transmission frame of the content stream is encrypted in a period excluding a period between a time point when a vertical synchronizing signal (vsync) is enabled and a time point when a keep_out signal is enabled.

10. A data receiver (200) comprising:
a receiver (210) configured to receive a packet including encryption information of a content stream from a data transmitter; and
a packet parser (220) configured to parse the received packet,
wherein the received packet comprises a first field for indicating identification information of the content stream, and a second field for indicating a first encryption parameter value of the content stream.

11. The data receiver as claimed in claim 10, wherein the second field comprises at least one from among a first sub-field for indicating a second encryption parameter value to distinguish the content stream, and a second sub-field for indicating a third encryption parameter value for link synchronization between the data transmitter and the data receiver.

12. The data receiver as claimed in claim 11, wherein the data receiver determines whether a value obtained by adding a number of lines of a transmission frame to a fourth encryption parameter value for link synchronization included in a previous packet of the received packet coincides with the third encryption parameter value for link synchronization included in the second field.

13. The data receiver as claimed in claim 10, wherein the received packet is transmitted between a time point when a vertical synchronizing signal is enabled and a time point when a keep_out signal is enabled, in a clock signal period.

14. The data receiver as claimed in claim 10, wherein the received packet is included in a transmission frame of the content stream and is transmitted, and
in a clock signal period, an encryption enable signal (enc_en/enc_dis) is transmitted and a result value of encrypting each line of the transmission frame is output from a time point when a data enable signal is transmitted.

15. A data transceiving system (1000) comprising:
a source device (100) which reads out Extended Display Identification Data (EDID) from a sink device (200), and if interface version information included in the EDID coincides with version information of an interface provided by the source device, generates a packet including encryption information of a content stream and transmits the generated packet to the sink device; and
the sink device which receives and parses the transmitted packet,
wherein the transmitted packet comprises at least one from among a first field for indicating identification information of the content stream, and a second field for indicating an encryption parameter value of the content stream.
